# EUROPEAN PATENT APPLICATION

(11) **EP 4 729 378 A1**
(43) Date of publication of application: **22.04.2026**
(21) Application number: 24210206.9
(22) Date of filing: 31.10.2024
(51) Int. Cl.: B60T 8/32, B60T 8/17, B60T 8/36, B60T 13/66, B60T 13/68

(54) **ELECTRONIC BRAKE SYSTEM AND METHOD FOR A REDUNDANT PRESSURE CONTROL**

(30) Priority: 21.10.2024 EP 24207869
(71) Applicant: KB Intellectual Property GmbH & Co. KG, 82049 Pullach (DE)
(72) Inventor: Wieder, Gerhard, 74354 Besigheim (DE); Hecker, Falk, 71706 Markgröningen (DE); Yildirim, Muhammet, 75417 Mühlacker (DE); Mustapha, Adnan, 75433 Maulbronn (DE)

(57) **Abstract**

An electronic brake system for a commercial vehicle connectable with a trailer is disclosed. The electronic brake system comprises a foot brake module, FBM, (100), a pressure control module, PCM, (200), and a trailer control valve, TCV, (300). The FBM (100) comprises one or more pneumatic output ports (110) and an input interface (130) for receiving a brake request. The FBM (100) is configured to generate one or more control pressures (101, 102) at the one or more pneumatic output ports (110) based on the brake request. The PCM (200) comprises a first channel port (210) and a second channel port (220). The first channel port (210) is configured to provide a first channel output (201). The second channel port (220) is configured to provide a second channel output (202). The TCV (300) comprises a pneumatic input port (310), an electronic input port (320), and a pressure sensor (330). The pneumatic input port (310) is connected with the one or more pneumatic output ports (110) of the FBM (100) to control pneumatically a brake pressure of the trailer in a primary mode. In a secondary mode, the TCV (300) is configured to control the brake pressure of the trailer based on an electronic brake signal (150) at the electronic input port (320) and utilizing the pressure sensor (330) to set the brake pressure of the trailer to a target value. The electronic brake signal (150) is an external brake request or is generated by the FBM (100)

## Description

The present invention relates to an electronic brake system and a method for a redundant pressure control and, in particular, to a cost-effective electronic brake system with and without a trailer control.

Commercial vehicles are required to have two brake circuits that are separated from each other. For example, one circuit controls the front axle and one the rear axle. Electronic brake systems, EBS, control electronically a brake pressure at axles or wheels utilizing at least one electronic pressure module (or electro pneumatic modulator), EPM. In an EBS system, the driver's request is determined electronically by means of a position or stroke sensor in a foot brake module (FBM) and is transmitted to a braking algorithm to calculate the target pressures which is transmitted electronically to pressure control units to apply the target pressure to brake cylinders at the wheels.

Conventional EBSs include, in addition to the electronic control channel, two independent pneumatic control channels to provide two control pressures for the two independent circuits as backup control when the electronic control of the EBS exhibits a failure (e.g. a malfunctioning of one component). Moreover, conventional EBSs have an EPM at the front axle and an EPM for the rear axle(s). A possibly coupled trailer (e.g. semi-trailer or drawbar trailer) is controlled in conventional EBSs by a conventional Trailer Control Module (TCM), which integrates an electronic pressure control and a parking brake function for the trailer, wherein the conventional TCMs have two pneumatic control circuits for the service brake.

Due to the multiple control circuits, these conventional EBSs are expensive. Thus, there is a demand for an electronic brake system that overcomes these disadvantages, i.e. fulfills the regulatory requirements, while relying on less expensive components and are easily to implement (e.g., use available components on vehicle) and do not need additional installation space.

At least some of these problems are overcome by an electronic brake system of claim 1 or a method according to claim 14. The dependent claims refer to further advantageous realizations of the subject matters of the independent claims.

The present invention relates to an electronic brake system, EBS, for a commercial vehicle that can be coupled to a trailer. The electronic brake system comprises a foot brake module, FBM, a pressure control module, PCM, and a trailer control valve, TCV. The FBM comprises one or more pneumatic output ports and an input interface for receiving a brake request. The FBM is configured to generate one or more control pressures at the one or more pneumatic output ports based on the brake request. The PCM comprises a first channel port and a second channel port. The first channel port is configured to provide a first channel output. The second channel port is configured to provide a second channel output. The TCV comprises a pneumatic input port, an electronic input port, and a pressure sensor. The pneumatic input port is connected with one of the one or more pneumatic output ports of the FBM to control pneumatically a brake pressure of the trailer in a primary mode. In a secondary mode, the TCV is configured to control the brake pressure of the trailer based on an electronic brake signal at the electronic input port. For this, the pressure sensor is utilized to set the brake pressure of the trailer to a target value. The electronic brake signal can be an external brake request or can be generated by the FBM.

Thus, the FBM may be a one-channel FBM or a two-channel FBM, wherein for the one-channel FBM only one pressure control circuit is formed providing only one control pressure, whereas for an two-channel FBM two pressure control circuits are formed providing a first control pressure and a second control pressure which may control different brakes (e.g. at the rear axle, front axle, and/or at the trailer). In addition, the FBM includes an electronic channel, e.g. a stroke sensor in the FBM may sense an actuation level and provides, in addition to the one or two control pressures, the electronic brake signal. An advantage of the two-channel FBM is the improved safety when higher fault tolerances are desired (e.g. in case of less vehicle maintenance can be expected).

In this disclosure, the term "connected" shall be construed broadly and include a fluid connection to provide a pneumatic channel for compressed air (control pressure or supply pressure) which, however, can be closed or opened by valves. Furthermore, in this disclosure the term "one or more components" shall be construed as "at least one component" implying that there can be only one component or a plurality of components.

The secondary mode may be a backup mode which may be employed in the event of any failure or insufficiency in the primary mode. Embodiments may use a corresponding detector for detecting a malfunctioning. The external brake request may originate from anti-lock brake system (ABS), an electronic stability program (ESP), an adaptive cruise control (ACC), a hill-start aid (HSA) or any other controller or electronic control unit, ECU, in the vehicle. For this, the EBS may comprise an interface to a vehicle network (e.g. a CAN) for receiving the external brake request(s). In addition, the EBS may couple to a brake controller (e.g. using the network interface) or may itself comprise a brake controller. For example, one of the components of the EBS may have a controller which may be used as a possible brake controller. The brake controller may be adapted to implement the electronic control (e.g. by generating the electronic control signal(s)).

Optionally, the TCV comprises a relay valve with a control port, a first solenoid valve, a second solenoid valve, and a pressure supply port. The first solenoid valve and/or the second solenoid valve are configured to forward, in the primary mode, one the of the one or more control pressures to the control port of the relay valve. Optionally, the first solenoid valve and/or the second solenoid valve are configured to interrupt or to open, in the secondary mode, the connection to the one of the one or more control pressures and to connect instead the control port of the relay valve to the pressure supply port. This may be based on or triggered by the electronic brake signal and an actual pressure sensed by the pressure sensor.

Optionally, the first solenoid valve is a monostable hold valve (e.g. 2/2-valve) to open and/or close the pneumatic input port. Optionally, the second solenoid valve is a monostable apply valve (e.g. a 3/2-valve or a 2/2-valve) to open and/or close the pressure supply port. The first solenoid valve and the second first solenoid valve may be arranged in a serial or parallel connection.

Optionally, the trailer control valve further comprises a parking brake input port for receiving a parking brake request. The parking brake input port may be adapted to activate the relay valve to provide a parking brake function for the trailer. The parking brake function may activate the brake at the trailer independently from the activation at the pneumatic input port (i.e. independently from the received control pressure, e.g. from the FBM).

Optionally, the TCV is an electro-pneumatic modulator which comprises one or more or all of the following:
- a trailer supply pressure port,
- a parking brake input port connected to a parking input port of the relay valve to activate a parking brake function,
- a third solenoid valve configured to exhaust the control port of the relay valve,
- a monostable pneumatic valve configured to selectively apply a throttle between the pressure supply port and the trailer supply pressure port.

The monostable pneumatic valve may apply the throttle in its activated position and forwards in its stable (default) position the supply pressure of the tractor to the trailer. This pneumatic valve allows a break-away function of the pressure control line to the trailer. This throttle provides a damping for the trailer supply pressure. The third solenoid valve enables to generate a pressure at the output port which is even below a control pressure at the pneumatic input port. This can be utilized in the electronic backup mode (secondary mode) to control the actual pressure to any desired value, where advantageously the pressure sensor is utilized to enable a pressure control loop.

Optionally, the commercial vehicle includes a front axle and at least one rear axle (e.g. a truck, towing vehicle, bus etc.). Then, the first channel port may be configured to provide the first channel output for one side of the at least one rear axle and the second channel port may be configured to provide the second channel output for the other side of the at least one rear axle. The EBS may further comprise a front axle modulator, FAM, with an input port, a pressure supply port, an apply solenoid valve, and a relay valve with a control port connectable to the input port to control a brake pressure on the front axle. The input port may be (fluidly) connected with the one of the one or more pneumatic output ports of the FBM. The apply solenoid valve may be configured to connect/disconnect the pressure supply port to/from the control port of the relay valve.

Therefore, the EBS provides two separate brake circuits, a first brake circuit may serve the front axle, and a second brake circuit may serve the rear axle(s). The trailer may be part of the first brake circuit or of the second brake circuit.

Optionally, the front axle modulator includes a first solenoid valve (e.g. 2/2-valve) to open and/or close the input port. Optionally, the front axle modulator includes a second solenoid valve (e.g. a 3/2- or a 2/2-valve) to open and/or close the pressure supply port. The second solenoid valve may be the apply solenoid valve. The first solenoid valve and/or the second first solenoid valve may be arranged as a serial connection or as a parallel connection. The first solenoid valve and/or the second first solenoid valve may be configured to forward, in the primary mode, one of the one or more control pressures to the control port of the relay valve. The first solenoid valve and/or the second first solenoid valve may be configured to interrupt or to open, in the secondary mode, the one of the one or more control pressures and to connect the control port of the relay valve to the pressure supply port based on a received electronic brake signal.

Optionally, the FAM is an electro-pneumatic modulator with an integrated controller, a pressure sensor, a first solenoid valve to open and close the input port, and a third solenoid valve configured to exhaust the control port of the relay valve. The integrated controller may be configured to receive the electronic brake signal and to generate a target pressure at the front axle based on the electronic brake signal and on an actual pressure value sensed by the pressure sensor.

Optionally, the front axle modulator includes a pressure sensor to determine a brake pressure provided to the brake cylinders, wherein the EBS is adapted to control the brake pressure at the front axle electronically by utilizing the pressure sensor in combination with the first solenoid valve and/or the second solenoid valve to set a target pressure value.

Thus, the FAM may be:
- a simple modulator with only a single solenoid valve (enabling only an electronic de/activation), or
- an extended modulator with two solenoid valves with and without a pressure sensor which provides an enhanced electronic control (to electronically increase a brake pressure and decrease it only down to the input pressure), or
- an EPM which provides a full electronic control (increase and decrease a pressure to any level).

Optionally, the PCM includes an electronic controller which is configured to receive the electronic brake signal and to generate a target pressure at the first channel output and/or at the second channel output based on the electronic brake signal. This may be the primary operation mode, wherein the target pressure(s) may be adjusted utilizing sensed pressures by pressure sensors.

It is understood that the electronic brake signal may be specific for the different brake circuits and/or for the trailer (because the applied brake force shall differ). Nevertheless, the present disclosure refers to these possibly different electronic brake signals commonly as the electronic brake signal. According to embodiments, the electronic brake signal may be constituted by a plurality of signals, e.g. for each axle, or for each channel or for the tailer a separate signal. All these signals can be distributed via the vehicle network.

Optionally, the PCM includes further a pneumatic backup port which is fluidly connectable to the first channel port and/or to the second channel port to provide a pneumatic backup brake control based on one of the one or more control pressures. The PCM may be configured to connect the pneumatic backup port with the first channel port only when the electronic controller is unable to generate the first channel output based on the electronic brake signal. Similarly, the PCM may be further configured to connect the pneumatic backup port with the second channel port only when the electronic controller is unable to generate the second channel output based on the electronic brake signal. This failure may also lie in another component (not in the PCM) and a corresponding notification may be distributed. For example, the electronic brake signal may be insufficient or erroneous (e.g. because the FBM is malfunctioning). But also then, the result is a wrong first/second channel output.

However, the backup port may be optional. According to further embodiments, the PCM does not include a backup port. A needed backup braking can be provided by the trailer via the TCL and/or the front axle. In this case, the PCM at the rear axle may be only electronically controlled, but not pneumatically.

Optionally, the PCM further includes a first pressure sensor for sensing a pressure at the first channel port, and/or a second pressure sensor for sensing a pressure at the second channel port, and/or a first relay valve and/or a second relay valve, and/or an inlet for a second supply pressure. The first relay valve may then be configured to provide a first target brake pressure for the first channel port utilizing the second supply pressure and the first pressure sensor. The second relay valve may then be configured to provide a second target brake pressure for second channel port utilizing the second supply pressure and the second pressure sensor.

Optionally, the FBM includes a stroke sensor adapted to determine an actuation level of the input interface by a driver (e.g. a position sensor for a brake pedal) and to generate the electronic brake signal based on the determined actuation level and based on a characteristic signal curve. The EBS may be adapted to modify the characteristic signal curve by an offset to lower a pressure level for the one or more control pressures associated with a desired braking effect. This will increase an available pressure range in the TCL and/or the front axle modulator. In particular for the electronic control mode (e.g. the backup mode), this option may be utilized to have a wider range for lowering the pressure by the solenoid valves in the TCL and/or front axle modulator (because the pressure input is the lowest available pressure).

Optionally, the FBM includes a first pressure control circuit and a second pressure control circuit. The one or more pneumatic output ports of the FBM may include a first pneumatic output port associated with the first pressure control circuit and second pneumatic output port associated with the second pressure control circuit. The FBM may be configured to generate in the first (or second) pressure control circuit the control pressure as a first (or second) control pressure at the first (or second) pneumatic output port. The FBM may further be configured to generate a second (or first) control pressure at the second (or first) pneumatic output port by the second (or first) control circuit. Each of the TCV and/or the PCM and/or FAM may respectively receive the first control pressure or the second control pressure for pneumatically controlling the respective brake pressures.

The trailer control with the (only) one pneumatic channel and one electronic channel allows a backup control (e.g. the electronic control) and allows more functions. Typically, the pneumatic control line is the same control line as at the front axle, but it is also possible to connect the trailer control line with the PCM.

Optionally, the brake system further comprises at least one of the following:
- a first air reservoir for supplying a first supply pressure to the FBM and to the front axle modulator,
- a second air reservoir for supplying the second supply pressure to the PCM and/or to the second pressure control circuit,
- a third air reservoir for providing a third supply pressure as pressure supply for the TCV,
- one or more wheel speed sensors for determining one or more respective wheel speeds at the front axle and/or wheel speeds at the at least one rear axle,
- one or more brake pad wear sensors for determining one or more respective brake pad wear values at the front axle and/or at the at least one rear axle,
- one or more pressure control valves, PCV, at the front axle, each PCV is configured to adjust a pressure at a respective wheel.

Embodiments relate also to a vehicle, in particular, to a commercial vehicle connectable with a trailer (e.g., a truck, a tractor, a bus, a towing vehicle, a vehicle combination etc.), which includes a brake system as described in this disclosure.

Embodiments relate also to a method for controlling a trailer brake pressure or a redundant pressure control in a commercial vehicle. The method comprises:
- receiving, by a foot brake module, FBM, a brake request,
- generating one or more control pressures at one or more pneumatic output ports of the FBM based on the brake request;
- providing, by a pressure control module, PCM, a first channel output at a first channel port and a second channel output at a second channel port; and
- controlling, by a trailer control valve, TCV, pneumatically a brake pressure of the trailer, in a primary mode, by one of the one or more control pressures and, in a secondary mode, controlling the brake pressure of the trailer based on an electronic brake signal to set a target value, the electronic brake signal can be an external brake request or may be generated by the FBM.

Optionally, the steps of providing and of controlling are performed as a primary mode or operation. If a malfunctioning prevents the primary mode of operation, a secondary mode of operation can be initiated which includes the steps of:
- pneumatically connecting a pneumatic backup port of the PCM with the first channel port and/or with the second channel port;
- providing a pneumatic backup brake control based on the one of the one or more control pressures (from the FBM).

Embodiments provide a cost-efficient EBS by replacing a conventional pneumatic TCV by a pneumatic TCV which is supplemented by an electronic control option as backup brake control, and which uses an additional pressure sensor to provide a desired target pressure. This provides the advantage that an FBM with only one pneumatic channel can be used - instead of the more expensive pneumatic two-channel FBMs. A further advantage relates to the fact that the TCV does not need to have any controller but can nevertheless provide an electronic backup control option. This, in turn, provides the advantage that the TCV does not need to have two pneumatic channels. Embodiments make use of these advantages.

Some examples of the brake system and/or methods will be described in the following by way of examples only, and with respect to the accompanying figures, in which:
- Fig. 1: depicts an electronic brake system according to an embodiment of the present invention.
- Figs. 2A,2B: depict further details of the electronic brake system for a commercial vehicle according to embodiments.
- Figs. 3A-3D: depict an embodiment for the supplementary electronic control of the trailer control valve and/or of the front axle modulator.
- Figs. 4A-4D: depict embodiments for the front axle modulator.
- Fig. 5: shows a schematic flow chart for a method of controlling a brake pressure according to embodiments.

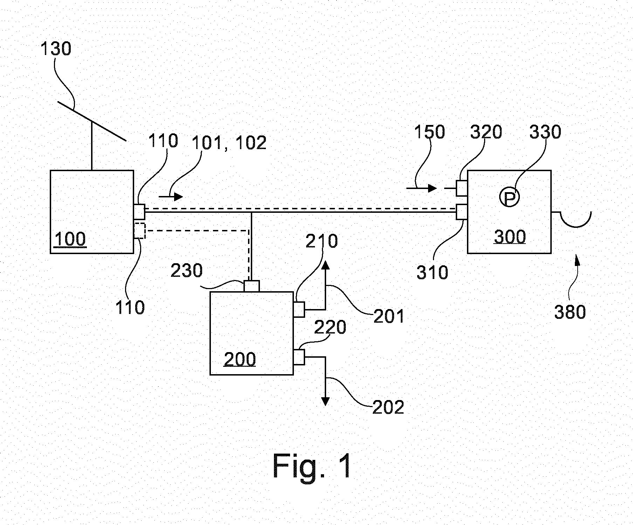

**Fig. 1** depicts an electronic brake system, EBS, according to an embodiment which is adapted to be used in a commercial vehicle such as a (long-haul) truck, a towing vehicle (with or without a trailer), a bus etc. The EBS comprises a foot brake module, FBM, 100 a pressure control module, PCM, 200, and a trailer control valve, TCV, 300. The FBM 100 comprises a pneumatic output port 110 and an input interface 130 for receiving a brake request.

The FBM 100 generates one or more control pressures 101, 102 at the one or more pneumatic output ports 110 based on the brake request (e.g. based on an actuation of the driver). The solid lines connecting the FBM 100 with the TCL 300 and the PCM 200 relate to the embodiment with only a single pneumatic output port 110, whereas the dashed solid lines connecting the FBM 100 with the TCL 300 and the PCM 200 relate to the embodiment with two pneumatic output ports 110 providing a first control pressure 101 and a second control pressure 102, one of which controlling the TCL 300 and the other controlling the PCM 200. The PCM 200 comprises a first channel port 210, a second channel port 220, and an optional pneumatic backup port 230. The first channel port 210 provides a first channel output 201, the second channel port 220 provides a second channel output 202, the pneumatic backup port 230 can be fluidly connected to the first channel port 210 and/or to the second channel port 220 to provide a pneumatic backup brake control based on the (first or second) control pressure 101,102 (from the FBM 100).

The TCV 300 comprises a pneumatic input port 310, an electronic input port 320, a pressure sensor 330, and an output 380 for a trailer (may have trailer coupling terminals) that may be coupled to the commercial vehicle. The pneumatic input port 310 is connected with one of the pneumatic output ports 110 to control pneumatically a brake pressure of the trailer in a primary mode. In a secondary mode (e.g. the backup mode), the TCV 300 is adapted to control the brake pressure of the trailer based on one or more electronic brake signals 150 at the electronic input port 320, wherein the pressure sensor 330 can be utilized to set the brake pressure to a desired target value.

The electronic brake signal(s) 150 can be an external brake request or can be generated by the FBM 100, wherein the external brake request can be sent from vehicle systems such as a driving stability function (e.g. ESP, TCS, ABS) or an assist system (e.g. ACC, HSA). The FBM 100 may generate the electronic brake signal(s) based on an actuation of a brake pedal by the driver. Also, an autonomous driving system may generate the electronic brake signal(s).

Thus, according to embodiments, the cost effective EBS brake system is realized by replacing a pneumatic two-channel FBM and a one-channel FBM 100 with only one pressure control circuit. The FBM 100 thus provides only a single pneumatic circuit and one electric circuit. Significant costs can be saved by not forming the second pneumatic circuit (pneumatic lines and less valve components are needed in the FBM). Same is true for the TCL, where embodiments save also one pneumatic channel and form instead electronic backup channel (using the integrated solenoids).

However, embodiments shall not be limited to a one-channel FBM. According to embodiments, the FBM may be a pneumatic two-channel FBM with two pneumatic control circuits allowing different axles or the trailer be controlled independently.

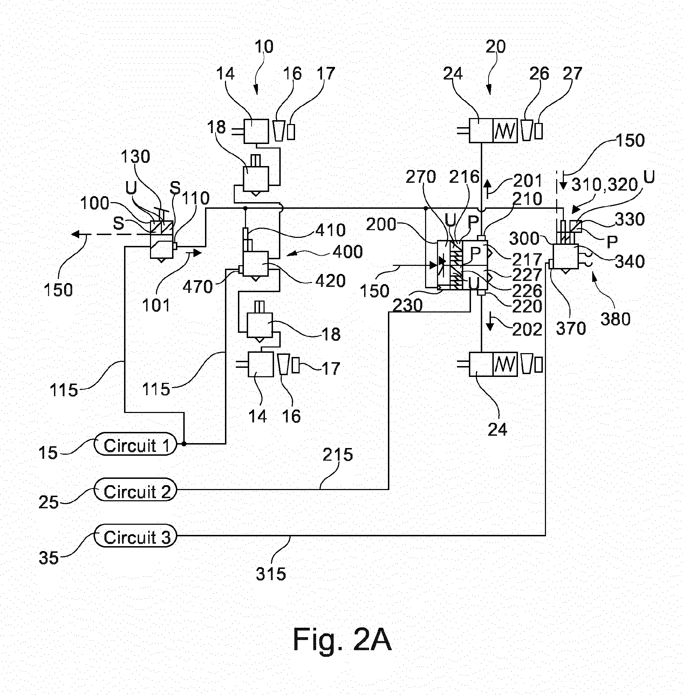

**Fig. 2A** depicts further details of embodiments for the implementation of the EBS of **Fig. 1** in a commercial vehicle, where the FBM 100 is a one-channel FBM 100 which may have only a single pneumatic output port 110 for the single control pressure 101. The exemplary commercial vehicle has at least one front axle 10 (e.g. steered axle) with brake cylinders 14 (on both sides) and at least one rear axle 20 (e.g. driven axle) with respective brake cylinders 24 (on both sides). Each brake cylinder 14, 24 or each wheel may be equipped with a respective wheel speed sensors 16, 26 for determining respective wheel speeds at the front axle(s) 10 and/or the at least one rear axle 20. In addition, brake pad wear sensors 17, 27 are installed for determining respective brake pad wear values at the front axle(s) 10 and/or the at least one rear axle 20.

According to the depicted embodiment, the EBS further comprises a first air reservoir 15 for supplying a first supply pressure 115 to the FBM 100, a second air reservoir 25 for supplying the second supply pressure 225 to the PCM 200, a third air reservoir 35 for providing a third supply pressure 315 as pressure supply for the TCV 300.

According to the depicted embodiment, the EBS further comprises a front axle modulator 400 with an input port 410 and a relay valve 420 connected with the first supply pressure 115 from the first air reservoir 15. The input port 410 is connected with the pneumatic output port 110 of the FBM 100 to control a brake pressure at the brake cylinders 14 on the front axle(s) 10. In addition, pressure control valves, PCV, 18 are installed on each side of the at the front axle 10 between the front axle modulator 400 and the respective brake cylinders 14.

However, at the rear axle(s) 20 no PCVs are installed. Instead, the first channel output 201 is provided for the brake cylinder 24 on one side the rear axle 20 and the second channel output 202 is provided for the brake cylinder 24 on the other (opposite) side of the rear axle 20. Thus, the PCM 200 controls the brake pressure on the rear axle(s) 20. For this, the PCM 200 includes an electronic controller 270 configured to receive the electronic brake signal(s) 150 and to generate target pressures as the first channel output 201 and/or as the second channel output 202 based on the electronic brake signal(s) 150.

The PCM 200 may further include a first pressure sensor 216 for sensing a pressure at the first channel port 210, a second pressure sensor 226 for sensing a pressure at the second channel port 220, a first relay valve 217, a second relay valve 227, and an inlet for the second supply pressure 215. The first relay valve 217 may provide a first target brake pressure (as first channel output 201) for the first channel port 210 utilizing the second supply pressure 215 and the first pressure sensor 216. The second relay valve 227 may provide a second target brake pressure (as second channel output 202) for second channel port 220 utilizing the second supply pressure 215 and the second pressure sensor 226.

Moreover, embodiments enable stability systems such as ABS and/or ESP and/or TCS to perform wheel-individual interventions (brake actuations), for which the determined wheel speed information can be used. To set a desired brake value, the PCVs 18 at the front axle 10 can be used and at the rear axle(s) 20 the electronic controller 270 can set separately brake pressure values at the rear brake cylinders 24 on both side by using the two independent channels (first channel output 201 and/or the second channel output 202).

Thus, embodiments implement two separate brake circuits, a first brake circuit for the front axle 10 utilizing the front axle modulator 400 and a second brake circuit for rear axle 20 utilizing the PCM 200.

In addition to the described electronic control, embodiment allow for pneumatic control at the rear axle(s). For this, the PCM 200 is configured to connect the pneumatic backup port 230 with the first channel port 210 and/or with the second channel port 220. This option may be applied as backup, or in other word, only when the electronic controller 270 is unable to generate the first channel output 201 and/or the second channel output 202, the pneumatic backup port 230 will be enabled. For example, the PCM 200 may comprise a respective the valve which opens the connection to the first/second channel port 210, 220. The pneumatic control pressure 101 may always be generated by FBM 100.

The front axle modulator 400 as well as the TCV 300 allow for two independent, redundant operational modes. Like the front axle modulator 400, also the TCV 300 includes a relay valve 340 which in the primary mode of operation may be controlled pneumatically by the control pressure 101 received from the FBM 100. The relay valves 340, 420 in the front axle modulator 400 and the TCV 300 amplify the air volume to provide a sufficient brake effect in the brake cylinders 14 and the trailer, resp. The relay valve 340 of the TCV 300 is therefore arranged between the third pressure supply 315 received at a pressure supply port 370 and trailer coupling terminals 380. Whereas the front axle modulator 400 does not need a pressure sensor (because the PCV 18 may control pressure values), the TCV 300 includes (or has access to) a pressure sensor 330, which is utilized in the secondary mode of operation that is explained in more detail in the following. However, optionally, also the front axle modulator comprises a pressure sensor.

The trailer control valve may comprise a parking brake function and a correspond input port for receiving a parking brake request. Thus, there may be three input ports: one pneumatic 310, one for electronic signals 320 and one a parking brake input. The parking brake input may be adapted to activate the relay valve 340 to provide a parking brake function for the trailer. The parking brake function may activate the brake at the trailer independently from the activation at the pneumatic input port (i.e. independently from the received control pressure, e.g. from the FBM).

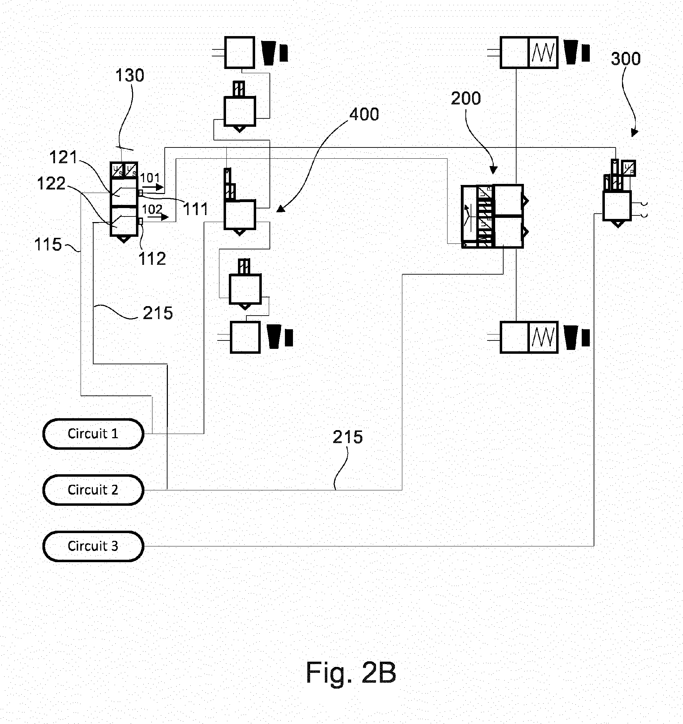

**Fig. 2B** depicts further details of the embodiment of the EBS of **Fig. 1****,** where the FBM 100 is a two-channel FBM 100 which may have two pneumatic output ports 110 for two control pressures 101, 102. For this, the FBM 100 includes a first pressure control circuit 121 and a second pressure control circuit 122. The two pneumatic output ports 110 include a first pneumatic output port 111 for a first control pressure 101 provided by the first pressure control circuit 121. The two pneumatic output ports 110 include further a second pneumatic output port 112 for a second control pressure 102 provided by the second pressure control circuit 122. Thus, the FBM 100 generates in the first pressure control circuit 121 the control pressure 101 as a first control pressure 101 at the first pneumatic output port 111. According to this embodiment, the FBM 100 generates a second control pressure 102 at the second pneumatic output port 112 by the second control circuit 121. It is understood that the naming of "first" and "second" pressures/ports are interchangeable, i.e. the previously mentioned control pressure may also be the second control pressure.

According to embodiments, the first control pressure 101 may be utilized to control at least one of the following: the TCV 300, the PCM 200, the FAM 400. Accordingly, the second control pressure 102 may be utilized to control at least one of the following: the TCV 300, the PCM 200, the FAM 400. It is understood that each of the TCV 300, the PCM 200, the FAM 400 should be controlled only by either the first control pressure 101 or by the second control pressure 102.

One advantageous embodiment is shown in **Fig. 2B****,** where the first control pressure 101 controls the FAM 400 and the TCL 300, whereas the PCM 200 is controlled by the second control pressure 102. This arrangement takes into account that the load on the rear axle 20 and on the trailer is often higher than on the front axle 10 so that an independent braking of the trailer and the rear axle 20 improves the safety. Likewise, when the trailer is decoupled from the tractor, an independent brake control of the front axle 10 and the rear axle 20 increases the safety, too.

All other components may be formed in the same was as in **Fig. 2A** and a repeated description is therefore not needed here. Apart from the mentioned differences the description of **Fig. 2A** applies also here. It is further noted, that crossing lines in the **Fig. 2B** do not mean a connection, but branches of T-junctions are connected.

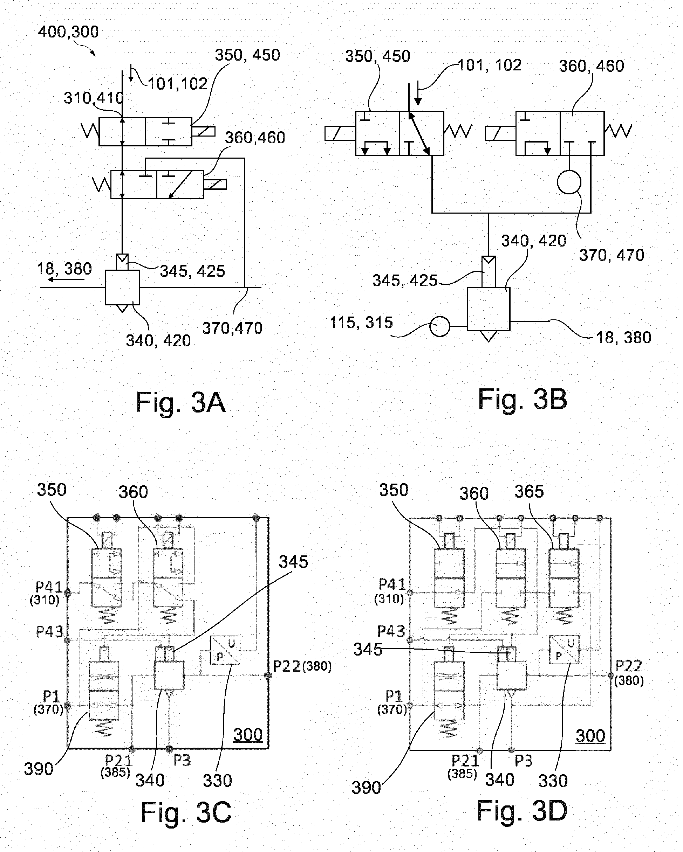

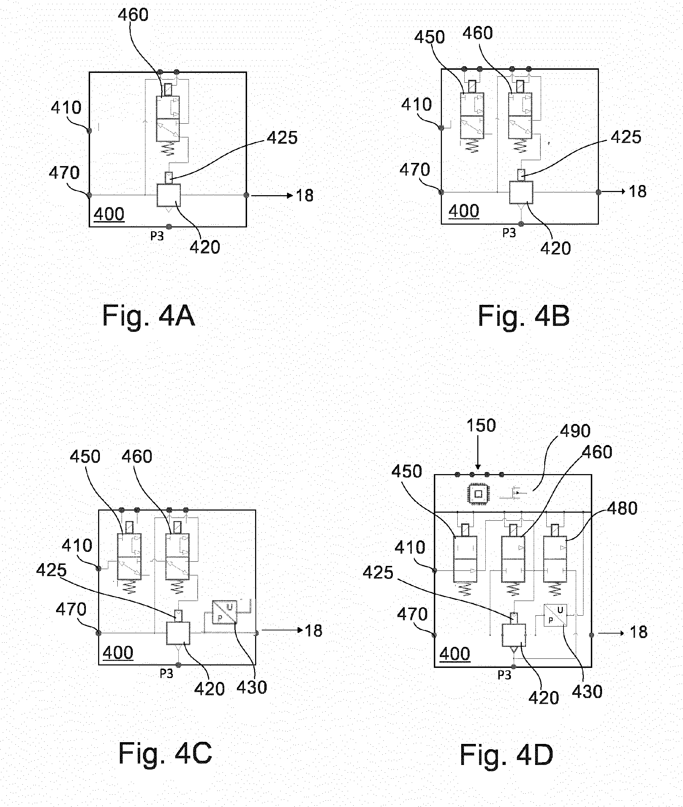

**Figs. 3A, 3B** depict embodiments for the supplementary electronic control of the TCV 300 and/or of the front axle modulator 400. **Fig. 3C** depicts an embodiment for the TCV 300 implementing a break-away function of the pressure control line to the trailer and **Fig. 4D** depicts an embodiment where the TCL 300 is formed as electro-pneumatic modulator. In the following, the control pressure 101 can be the first control pressure 101 or the second control pressure 102.

Starting with **Figs. 3A** and **3B****,** both, the TCV 300 and the front axle modulator 400 allow the above-described pneumatic control, where the control pressure 101 from the FBM 100 is used as control for the relay valves 340, 420. This may be used as primary mode of operation. A secondary (backup) mode of operation may be implemented as an electronic control. For this, the TCV 300 and/or front axle modulator 400 includes a first solenoid valve 350, 450 to open and/or to close the respective input port 310, 410, and a second solenoid valve 360, 460 to open and/or to close the respective pressure supply port 370, 470 (for the third/first supply pressure 315, 115). The first solenoid valve 350, 450 (e.g. formed as 2/2-valve) and the second solenoid valve 360 460 may arranged as a serial connection (see **Fig. 3A**) or as a parallel connection (see **Fig. 3B**). In the serial connection of **Fig. 3A** the second solenoid valve 360, 460 is formed as a 3/2-valve. In parallel connection of **Fig. 3B** the second solenoid valve 360, 460 is likewise formed as a 2/2-valve.

The first solenoid valve 350, 450 may be a monostable valve, where the open state is the default stable position (e.g. when no electric signal is applied). Likewise, the second solenoid valve 360, 460 may be a monostable, where the open state is the default stable position (e.g. when no electric signal is applied). In this setting, the pneumatic control is the primary mode of operation. The first solenoid valve 350, 450 may act as a hold valve to decouple the pneumatic input port 310, 410 and to hold the state of the relay valve 340, 420 (when the second solenoid 360, 460 remains in its position). The second solenoid valve 360, 460 may be an apply valve that applies the pressure supply 115, 315 to the relay valve 340, 420 and thus activates the pressure volume increase at the brake cylinders 14 or the trailer coupling terminals 380. The hold state may be used to brake the trailer independently of an actuation of the driver (e.g. as stretch braking) whereas the apply state may be utilize to set a predetermined braking force during a stop (e.g. to keep the vehicle combination at a standstill).

The first solenoid valve 350, 450 and the second solenoid valve 360, 460 may be controlled by a controller (e.g. a brake control unit), which may set the brake pressure at the brake cylinders 14 or at the trailer coupling terminals 380 based on the electronic brake signals 150 (i.e. an actuation level of the FBM 100 or the external brake request). The controller can be external, i.e. the front axle modulator 400 as well as the TCL 300 do not need to have an own controller.

Thus, according to embodiments, the front axle modulator 400 with its pneumatic relay valve 420 has an integrated double-magnetic valve (first and second solenoids 350, 360) and allows various functions:
- brake pressure control by the driver,
- a pressure increase from the system,
- blocking or hold function from the system,
- release the pressure to the level of the input pressure from driver.

The solenoid valves 450, 460 control the pressure of the relay piston and thus control the pressure valve at the axle pressure without using the PCVs 18. Because an exhaust port is missing in the front axle modulator 400 and the TCL 300, the pressure set by the driver through the input interface 130 represents a lower limit for the pressure applicable at the control port of the relay valve 420. Same applies for the trailer brake pressure controlled by the TCV 300 with uses the same valve arrangement. Like conventional TCV, the TCV 300 may have an integrated park brake function, but has only a single-circuit pneumatic service brake function. Unlike conventional trailer control valves or trailer control module, embodiments do not have two independent pneumatic service brake functions.

The FBM 100 may be formed as in **Fig. 1****,** which also has only a single pneumatic channel and a stroke sensor to measure the driver brake request and to generate an electronic brake signal 150.

On the other hand, the PCM 200 includes an integrated central controller 270 (an electronic control unit, ECU) and includes a two-channel pressure modulator.

Embodiments thus provide all functions of an electronic brake system. In particular, also an external brake requests (e.g. from adaptive cruise control, ACC, or an hillstart aid, HSA), which often request axle or trailer brake pressure can be handled. Likewise, ESP interventions to brake the vehicle itself selectively and/or the trailer can be processed, accordingly. For load dependent brake force, the PCM 200 at the rear axle 20 can be used.

**Fig. 3C** depicts another embodiment for the TCL 300. The TCL 300 has the following external ports:
- P1 is a supply port (or supply port 370 for the third pressure supply 315)
- P3 is an exhaust port
- P21 for trailer supply pressure
- P22 for trailer brake pressure (control line, output 380)
- P41 for service brake input (pneumatic input port 310)
- P43 for a parking brake input (inverse function, i.e. no pressure means the brakes are activated.

In addition, there are electrical terminals indicated at the top line to control the first solenoid 350 and the second solenoid 360, which provide the same functions as described with **Fig. 3A****.** The TCL 300 includes again a relay valve 340 with a control input controlled by the second solenoid valve 360 and another input for the parking brake (connected with the port P43). The TCL 300 includes an optional pressure sensor 330 to determine the pressure at the port P22 (output 380). To regulate this pressure, the TCL 300 includes an exhaust port P3 which can be used to exhaust the output 380.

According to the depicted embodiment, the TCL 300 comprises a monostable valve 390 for implementing a break-away function of the pressure control line to the trailer on port P22. This monostable valve 390 is connected between the supply port P1 for the third pressure supply 315 and the port P21 for trailer supply pressure and forwards in its stable (default) position the third supply pressure 315 to the trailer. In its activated position, the monostable valve 390 connects a throttle between the supply port P1 and the port P21 for the trailer supply pressure. This throttle provides a damping for the trailer supply pressure on port P21.

**Fig. 3D** depict an embodiment, where the TCV 300 is an electro-pneumatic modulator. This TCL 300 includes the same external ports as described with Fig. 3C. Likewise, the electro-pneumatic modulator 300 of **Fig. 3D** comprises also the pressure sensor 330, the monostable pneumatic valve 390, the first solenoid valve 350 to open and/or close the pneumatic input port 310 (P41) and comprises also the second solenoid valve 360 to apply and/or not to apply the supply port (at port 370 or P1) to the control port 345 of the relay valve 340. Both solenoids 350, 360 are monostable as described with **Fig. 3A** to **3C****.** The functioning of the monostable pneumatic valve 390 is likewise the same as described before, namely the pressure supply is fed to the trailer as default mode and a throttle is applied for the pressure supply port P21 of the trailer in its activated position. Also, like in **Fig 3C** the relay valve 340 includes again a (inverse) port for receiving a parking brake request (via the parking brake port P43).

In addition to the previous embodiments, the electro-pneumatic modulator 300 of **Fig. 3D** comprises a third solenoid valve 365 configured to exhaust the control port 345 of the relay valve 340. Therefore, this TCV 300 is adapted to generate a pressure at the output port P22 which can be even below the pressure applied at the pneumatic input port 310. The second solenoid valve 360 is adapted to increase the pressure at the control port 345 (up to the third supply pressure 315), whereas the third solenoid valve 365 is adapted to decrease the pressure at the control port 345 (up to zero pressure). Therefore, at least in its secondary operation mode (electronic control), the TCL 300 is able to provide any target control pressure value to the trailer. The target control pressure can be set to any value, wherein the pressure sensor 330 may be utilized in a closed pressure loop.

**Figs. 4A** to **4D** depict embodiments for the FAM 400. **Fig. 4A** depicts a simple modulator 400 with only a single solenoid valve 460 enabling only an electronic de/activation. **Figs. 4B** and **4C** depict an extended modulator with two solenoid valves 450, 460 which provides an enhanced electronic control to electronically increase a brake pressure and decrease it up the input pressure. The embodiment of **Fig. 4B** has no pressure sensor, whereas the embodiment of the **Fig. 4C** includes a pressure sensor 430. **Fig. 4D** depicts an EPM as FAM 400 which provides a full electronic control to increase and decrease a pressure to any level.

All FAMs 400 comprises an input port 410, a pressure supply port 470, an apply solenoid valve 460, a relay valve 420 with a control port 425 connectable to the input port 410 to control a brake pressure on the front axle 10 via an output connected to the PCVs 18.

The simple FAM 400 of **Fig. 4A** includes only one solenoid (the apply valve 460) to apply or not to apply the control pressure at the input port 410 to the control port 425 of the relay valve 420. The input port 410 may be connected with the first pneumatic input port 111 or with second pneumatic output port 112 of the FBM 100. The FAM 400 could be combined with every of the above described FBM 100 and/or PCM 200 and/or TCV 300. In this and the other embodiments, the PCVs 18 may be utilized to control the wheel pressure.

The enhanced FAM 400 of **Figs. 4B** and **4C** include a first solenoid valve 450 to open and close the input port 410. The apply solenoid valve 460 is a second solenoid valve 460 to open and close a connection from the pressure supply port 470 to the control port 425 of the relay valve 420. The first solenoid valve 450 and the second first solenoid valve 460 may be arranged as described with **Figs. 3A** and **3C** and are configured to forward, in a primary mode, the pressure at the input port 410 to the control port 425 of the relay valve 420. In a secondary mode, the pressure at input port 410 is interrupted and the control port 425 of the relay valve 420 is connected to the pressure supply port 470 based on the electronic brake signal 150.

In the embodiment of **Fig. 4C****,** the FAM 400 includes the pressure sensor 430 to determine a brake pressure provided at the output to be fed to the brake cylinders 14 or PCV 18. The electronic brake system may be adapted to control the brake pressure at the front axle 10 electronically by utilizing, the pressure sensor 430 in combination with the first solenoid valve 450 and the second solenoid valve 460 to set a desired target pressure value.

According to further embodiments, the FAM 400 may include crack pressure function. This function reduces the provided pressure at the output to ensure that the applied brake force at the tractor is less or applied later when compared to the brake force at the trailer. This will in turn increase the stability. When namely the trailer brakes stronger than the tractor, the stability of a vehicle combination is improved. This function can be implemented by a spring arranged under the piston of the relay valve, wherein the spring pushes the piston upward against the pressure force exerted by the control pressure at the control port 425 to lower the generated pressure. As a result, the characteristics of the relay valve 420 is changed. For example, the front axle 10 may receive about 0,4 bar less brake pressure when compared with the trailer. Since the rear axle 20 is controlled electronically, the controller 270 of the PCM 200 can make sure that also the rear axles 20 receives the same reduced pressure as at the front axle 10.

In the embodiment of **Fig. 4D**, the FAM 400 is an electro-pneumatic modulator with an integrated controller 490, a pressure sensor 430, a first solenoid valve 450 to open and close the input port 410, the second solenoid valve 460, and a third solenoid valve 480. The second solenoid valve 460 is again adapted to open and/or to close a connection from the pressure supply port 470 to the control port 425 of the relay valve 420. The third solenoid valve 480 is configured to exhaust the control port 425 via an exhaust port P3. The integrated controller 490 is configured to receive the electronic brake signal 150 and to generate a target pressure at the front axle 10 based on the electronic brake signal 150 and on an actual pressure value sensed by the pressure sensor 430.

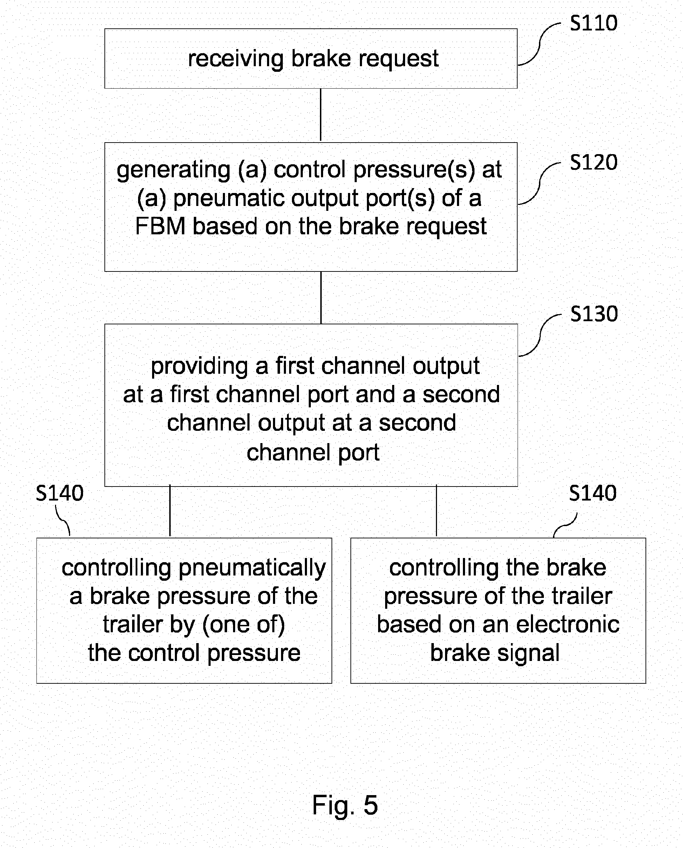

**Fig. 5** depicts a schematic flow diagram of a method for controlling a trailer brake pressure in a commercial vehicle. The method comprises the steps of:
- receiving S110, by a FBM 100, brake request,
- generating S120 one or more control pressures 101, 102 at one or more pneumatic output ports 110 of the FBM 100 based on the brake request;
- providing S130, by a PCM 200, a first channel output 201 at a first channel port 210 and a second channel output 202 at a second channel port 220; and
- controlling S140, by a TCV 300, pneumatically a brake pressure of the trailer, in a primary mode, by one of the one or more control pressures 101, 102 and, in a secondary mode, controlling the brake pressure of the trailer based on an electronic brake signal 150 to a target value, wherein the electronic brake signal 150 is an external brake request or is generated by the FBM 100.

The steps of providing S130 and of controlling S140 may be performed as a primary mode. However, if a malfunctioning prevents the primary mode of operation, the secondary mode of operation including the steps:
- pneumatically connecting a pneumatic backup port 230 of the PCM 200 with the first channel port 210 and/or with the second channel port 220;
- providing a pneumatic backup brake control based on one of the one or more control pressures 101, 102.

Embodiments provide the following advantageous technical effects:
Embodiments provide a separation of different brake circuits. The circuits are protected in that a failure in one circuit (e.g. at the front axle modulator 400) still allows to control the trailer pressure accurately. For this, the TCV 300 can use its pressure sensor 300 and is connected to the third supply pressure 315 which is different from the supply pressure provided at the front axle 10 and allows to set the trailer pressure accordingly - even though the brake circuit at the front axle 10 has a failure.

Connected supply circuits may also be used to realize a second circuit in the trailer control.

The front axle modulator 400 is mainly controlled with pneumatic control line pressure (control pressure(s) 101, 102) from the FBM 100. For the electronic control, the first and second solenoids 450, 460 are used to provide pressure to the front axle 10 (i.e. for ESP, HSA).

The novel TCV 300 is another part of the cost-effective electronic brake system. The trailer control pressure is mainly controlled (as primary operation mode) with pneumatic control line pressure (the control pressure(s) 101, 102) from the FBM 100. For electronic control of the first and/or the second solenoids 450, 460 of the TCV 300 are used to provide pressure to the trailer control line, e.g. as backup or secondary operation mode when there is failure in pneumatic control. The electronic control can be used for ESP, HSA and other assist functions. It may also be used as a backup for failure in the pneumatic control circuit from the FBM 100. For this, the additional pressure sensor 330 can be employed to realize a closed loop control of the electronic pressure (a so-called 1-electronic-circuit). On one side, this realizes the second control circuit for the trailer and, on the other side, replaces the second pneumatic circuit which is used in conventional TCVs. Therefore, the brake system mainly controls (e.g. in primary mode of operation) the vehicle or the vehicle combination (with a trailer) with the pneumatic control pressure at front axle 10 and the trailer. The rear axle(s) 20 can be controlled electronically as the primary mode of operation (e.g. utilizing the electronic controller 270 and solenoid valve comprised in the PCM 200).

According to further embodiments, the TCV 300 can control the trailer mainly in electronic control mode. However, for this, the pressure is limited on the control pressure from the FBM 100 (i.e. the driver brake application), because the TCV 300 cannot actively exhaust air (see **Fig. 3A** and **Fig. 3C**), but can only increase the pressure to the trailer compared to the input from FBM 100 (control pressure(s) 101, 102).

According to further embodiments, the front axle modulator 400 comprises an additional pressure sensor to measure an axle pressure and to control the front axle pressure mainly in electronic mode (e.g. a primary mode of control). With this the system, the pressure at the front axle 10 can deliberately be set differently or higher than the pressure at FBM 100 (e.g. the control pressure(s) 101, 102) and/or at the rear axle. This allows a load-dependent braking, in particular at the rear axle(s) 20.

According to further embodiments, the electric signal characteristic curve of the stroke or position sensor in the FBM 100 could create a predominant or higher signal for the calculated output pressure(s) 101, 102 in a way that the FBM 100 pneumatic pressure is smaller than the usual pressure in the axle or trailer. Thus, embodiments allow a pressure offset in the characteristic curve which is used to determine the output pressure (or the control pressure(s) 101, 102). Thus, the FBM 100 can output a lower control pressure 101, 102 to achieve the same braking effect. As consequence, the first and second solenoids 350, 360, 450, 460 can decrease the pressure to a lower level. The available pressure bandwidth (or control range) is thus increased by this offset in the characteristic curve. Thus, an increased pressure range in which the front axle modulator 400 and/or the TCV 300 is achieved.

The description and drawings merely illustrate the principles of the disclosure. It will thus be appreciated that those skilled in the art will be able to devise various arrangements that, although not explicitly described or shown herein, embody the principles of the disclosure and are included within its scope.

Functions of various elements shown in the figures may be provided through the use of dedicated hardware as well as hardware capable of executing software in association with appropriate software. Moreover, any entity described herein as "device", may correspond to or be implemented as "one or more modules", "one or more devices", "one or more units", etc. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective acts of these methods. Further, it is to be understood that the disclosure of multiple acts or functions disclosed in the specification or claims may not be construed as to be within the specific order. Therefore, the disclosure of multiple acts or functions will not limit these to a particular order unless such acts or functions are not interchangeable for technical reasons. Furthermore, in some examples a single act may include or may be broken into multiple sub acts. Such sub acts may be included and part of the disclosure of this single act unless explicitly excluded.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### LIST OF REFERENCE SIGNS

- 10: front axle
- 14: front brake cylinders
- 16, 26: wheel speed sensors
- 17, 27: brake pad wear sensors
- 18: pressure control valve(s) (PCV)
- 20: at least one rear axle
- 24: rear brake cylinders
- 100: foot brake module (FBM)
- 101,102: control pressure(s)
- 110,111,112: pneumatic output ports
- 115,215,315: pressure supply
- 121,122: first and second pressure control circuits
- 130: input interface
- 150: electronic brake signal
- 200: pressure control module (PCM)
- 201: first channel output
- 202: second channel output
- 210: first channel port
- 220: second channel port
- 216,226: pressure sensors
- 217,227: relay valves
- 215: second supply pressure,
- 230: pneumatic backup port
- 270: electronic controller
- 300: trailer control valve (TCV)
- 310: pneumatic input port
- 320: electronic input port
- 330,430: pressure sensors
- 340: relay valve
- 345: control port (of relay valve)
- 350: first solenoid valve
- 360: second solenoid valve
- 365: third solenoid valve
- 370: pressure supply port
- 380: output port/terminal (e.g. of TCL)
- 385: trailer pressure supply port
- 390: monostable (pneumatic) valve
- 400: front axle modulator (FAM)
- 410: input port
- 420: relay valve
- 425: control port
- 450: first solenoid valve
- 460: second solenoid valve
- 470: pressure supply port
- 480: third solenoid valve
- 490: controller
- P1: supply port
- P3: exhaust port
- P21: port for trailer supply pressure
- P22: port for trailer brake pressure
- P41: port for service brake input
- P43: port for parking brake input

## Claims

1. An electronic brake system for a commercial vehicle connectable with a trailer, **characterized by:**
- a foot brake module, FBM, (100) comprising one or more pneumatic output ports (110) and an input interface (130) for receiving a brake request, the FBM (100) being configured to generate one or more control pressures (101, 102) at the one or more pneumatic output ports (110) based on the brake request;
- a pressure control module, PCM, (200) with a first channel port (210) and a second channel port (220), the first channel port (210) being configured, based on an electronic brake signal (150), to provide a first channel output (201), the second channel port (220) being configured, based on the electronic brake signal (150), to provide a second channel output (202); and
- a trailer control valve, TCV, (300), with a pneumatic input port (310), an electronic input port (320), and a pressure sensor (330), the pneumatic input port (310) is connected with one of the one or more pneumatic output ports (110) of the FBM (100) to control pneumatically a brake pressure of the trailer in a primary mode, and, in a secondary mode, the TCV (300) is configured to control the brake pressure of the trailer based on the electronic brake signal (150) at the electronic input port (320) and utilizing the pressure sensor (330) to set the brake pressure of the trailer to a target value, the electronic brake signal (150) being an external brake request or being generated by the FBM (100).

2. The electronic brake system according to claim 1, wherein the TCV (300) comprises a relay valve (340) with a control port (345), a first solenoid valve (350), a second solenoid valve (360), and a pressure supply port (370), the first solenoid valve (350) and the second solenoid valve (360) are configured to
- forward, in the primary mode, one of the one or more control pressures (101, 102) to the control port (345) of the relay valve (340), and/or
- interrupt or to open, in the secondary mode, the connection to the one of the one or more control pressures (101, 102) and to connect the control port (345) of the relay valve (340) to the pressure supply port (370) based on the electronic brake signal (150) and an actual pressure sensed by the pressure sensor (330), wherein the first solenoid valve (350) is a monostable hold valve to open and close the pneumatic input port (310), and the second solenoid valve (360) is a monostable apply valve to open and close the pressure supply port (370), and the first solenoid valve (350) and the second first solenoid valve (360) are arranged in a serial or parallel connection.

3. The electronic brake system according to claim 2, wherein the TCV (300) is an electro-pneumatic modulator which comprises at least one of the following:
- a trailer supply pressure port (385),
- a parking brake input port (P43) connected to a parking input port of the relay valve (340) to activate a parking brake function,
- a third solenoid valve (365) configured to exhaust the control port (345) of the relay valve (340),
- a monostable pneumatic valve (390) configured to selectively apply a throttle between the pressure supply port (370) and the trailer supply pressure port (385).

4. The electronic brake system according to any one of claims 1 to 3, wherein the commercial vehicle includes a front axle (10) and at least one rear axle (20), the first channel port (210) is configured to provide the first channel output (201) for one side of the at least one rear axle (20) and the second channel port (220) is configured to provide the second channel output (202) for the other side of the at least one rear axle (20),
the electronic brake system further comprising a front axle modulator, FAM, (400) with an input port (410), a pressure supply port (470), an apply solenoid valve (460), a relay valve (420) with a control port (425) connectable to the input port (410) to control a brake pressure on the front axle (10), wherein the input port (410) is connected with the one of the one or more pneumatic output ports (110) of the FBM (100), and the apply solenoid valve (460) is configured to connect the pressure supply port (470) to the control port (425).

5. The electronic brake system according to claim 4, wherein the FAM (400) includes a first solenoid valve (450) to open and close the input port (410), wherein the apply solenoid valve (460) is a second solenoid valve (460) to open and close the pressure supply port (470), wherein the first solenoid valve (450) and the second first solenoid valve (460) are arranged as a serial connection or as a parallel connection and are configured to
- forward, in the primary mode, one of the one or more control pressures (101, 102) to the control port (425) of the relay valve (420), and
- interrupt, in the secondary mode, the one of the one or more control pressures (101, 102) and to connect the control port (425) of the relay valve (420) to the pressure supply port (470) based on the electronic brake signal (150).

6. The electronic brake system according to claim 5, wherein the FAM (400) includes a pressure sensor (430) to determine a brake pressure provided to the brake cylinders (14), wherein the electronic brake system is adapted to control the brake pressure at the front axle (10) electronically by utilizing, the pressure sensor in combination with the first solenoid valve (450) and the second solenoid valve (460) to set a target pressure value.

7. The electronic brake system according to claim 4, wherein the FAM (400) is an electro-pneumatic modulator with an integrated controller (490), a pressure sensor (430), a first solenoid valve (450) to open and close the input port (410), and a third solenoid valve (480) configured to exhaust the control port (425), wherein the integrated controller (490) is configured to receive the electronic brake signal (150) and to generate a target pressure at the front axle (10) based on the electronic brake signal (150) and on an actual pressure value sensed by the pressure sensor (430).

8. The electronic brake system according to any one of claims 1 to 7, wherein the PCM (200) includes an electronic controller (270) configured to receive the electronic brake signal (150) and to generate a target pressure at the first channel output (201) and/or at the second channel output (202) based on the electronic brake signal (150), wherein the PCM (200) further includes a pneumatic backup port (230) which is fluidly connectable to the first channel port (210) and/or to the second channel port (220) to provide a pneumatic backup brake control based on one of the one or more control pressures (101, 102),
the PCM (200) being further configured to connect the pneumatic backup port (230) with the first channel port (210) and/or with the second channel port (220) only when the electronic controller (270) is unable to generate the first channel output (201) and/or the second channel output (202) based on the electronic brake signal (150).

9. The electronic brake system according to claim 8, wherein the PCM (200) further includes a first pressure sensor (216) for sensing a pressure at the first channel port (210), a second pressure sensor (226) for sensing a pressure at the second channel port (220), a first relay valve (217), a second relay valve (227), and an inlet for a second supply pressure (215),
wherein the first relay valve (217) is configured to provide a first target brake pressure for the first channel port (210) utilizing the second supply pressure (215) and the first pressure sensor (216), and/or
wherein the second relay valve (227) is configured to provide a second target brake pressure for second channel port (220) utilizing the second supply pressure (215) and the second pressure sensor (226).

10. The electronic brake system according to any one of claims 1 to 9, wherein the FBM (100) includes a stroke sensor adapted to determine an actuation level of the input interface (130) by a driver and to generate the electronic brake signal (150) based on the determined actuation level and on a characteristic signal curve,
wherein the electronic brake system is adapted to modify the characteristic signal curve by an offset to lower a pressure level for the one or more control pressures (101, 102) associated with a desired braking effect and thus to increase an available pressure range in the TCV (300) and the FAM (400) as claimed in one of claims 3 to 6.

11. The electronic brake system according to any one of claims 1 to 10, wherein the FBM (100) includes a first pressure control circuit (121) and a second pressure control circuit (122), and wherein the one or more pneumatic output ports (110) of the FBM (100) include a first pneumatic output port (111) associated with the first pressure control circuit (121) and second pneumatic output port (112) associated with the second pressure control circuit (122),
the FBM (100) being configured to generate in the first pressure control circuit (121) the control pressure (101) as a first control pressure (101) at the first pneumatic output port (111), the FBM (100) being further configured to generate a second control pressure (102) at the second pneumatic output port (112) by the second control circuit (121),
and wherein the TCV (300), the PCM (200), and FAM (400) as claimed in claim 4 are all configured to receive either the first control pressure (101) or the second control pressure (102) for pneumatically controlling the respective brake pressures.

12. The brake system according to any one of claims 3 to 11, further comprising at least one of the following:
- a first air reservoir (15) for supplying a first supply pressure (115) to the FBM (100) and to the FAM (400),
- a second air reservoir (25) for supplying a second supply pressure (225) to the PCM (200) or the second pressure control circuit (122) as claimed in claim 11,
- a third air reservoir (35) for providing a third supply pressure (315) as pressure supply for the TCV (300),
- one or more wheel speed sensors (16, 26) for determining one or more respective wheel speeds at the front axle (10) and/or wheel speeds at the at least one rear axle (20),
- one or more brake pad wear sensors (17, 27) for determining one or more respective brake pad wear values at the front axle (10) and/or at the at least one rear axle (20),
- one or more pressure control valves, PCV, (18) at the front axle (10), each PCV (18) is configured to adjust a pressure at a respective wheel.

13. A vehicle, in particular a commercial vehicle configured to couple to at least one trailer, with a brake system according to any one of the preceding claims.

14. A method for a redundant pressure control in a commercial vehicle, **characterized by:**
- receiving (S110), by a foot brake module, FBM, (100), a brake request,
- generating (S120) one or more control pressures (101, 102) at one or more pneumatic output ports (110) of the FBM (100) based on the brake request;
- providing (S130), by a pressure control module, PCM, (200) and based on an electronic brake signal (150), a first channel output (201) at a first channel port (210) and a second channel output (202) at a second channel port (220); and
- controlling (S140), by a trailer control valve, TCV, (300), pneumatically a brake pressure of the trailer, in a primary mode, by one of the one or more control pressures (101, 102) and, in a secondary mode, controlling the brake pressure of the trailer based on the electronic brake signal (150) to a target value, the electronic brake signal (150) being an external brake request or being generated by the FBM (100).

15. The method of claim 14, wherein the steps of providing (S130) is performed as a primary mode and, if a malfunctioning prevents the primary mode of operation, the secondary mode of operation for the PCM (200) includes the steps of:
- pneumatically connecting a pneumatic backup port (230) of the PCM (200) with the first channel port (210) and/or to the second channel port (220);
- providing a pneumatic backup brake control based on the one of the one or more control pressures (101, 102).
